# EUROPÄISCHE PATENTANMELDUNG

(11) **EP 0 751 142 A2**
(43) Veröffentlichungstag der Anmeldung: **02.01.1997**
(21) Anmeldenummer: 96110138.3
(22) Anmeldetag: 24.06.1996
(51) Int. Cl.: C07F 13/00

(54) **Chirale Mangan-triazanonankomplexe und Verfahren zu ihrer Herstellung**

(30) Priorität: 30.06.1995 DE 19523891
(71) Anmelder: HOECHST AKTIENGESELLSCHAFT, 65929 Frankfurt am Main (DE)
(72) Erfinder: Beller, Matthias, Prof. Dr., 85737 Ismaning (DE); Tafesh, Ahmed, Dr., 65779 Kelkheim (DE); Fischer, Richard Walter, Dr., 65812 Bad Soden (DE); Scharbert, Bernd, Dr., 65934 Frankfurt (DE)

(57) **Zusammenfassung**

Die Erfindung betrifft chirale Mangan-triazanonankomplexe der Formel (I)

[Mnᵤ(L)ᵥ(OR)_{w}(µ-O)ₓ(µOAc)_{y}]X_{z}

worin bedeuten:
u, v gleich 1 oder 2;
w, x, y gleich 0, 1, 2 oder 3;
z gleich 1, 2 oder 3
mit der Maßgabe, daß, wenn u = 1 ist, v = 1, w = 1, 2 oder 3, z = 1, 2 oder 3 sind,
oder, wenn u = 2 ist, v = 2, w = 0 oder 1, x = 1, y = 2, z = 1 oder 2 sind, oder v = 2, w = 0 oder 1, x = 1, y = 2, z = 2 oder 3 sind, oder v = 2, w = 0 oder 1, x = 3, y = 0, z = 1 oder 2 sind;
- R: (C₁-C₁₂)Alkyl,
- X: PF₆^{⊖}, F^{⊖}, Cl^{⊖}, Br^{⊖}, I^{⊖}, (C₆H₅)B^{⊖}, ClO₄^{⊖} bedeutet und
- L: für einen chiralen organischen Triazanonan-Liganden der allgemeinen Formel (II) steht, 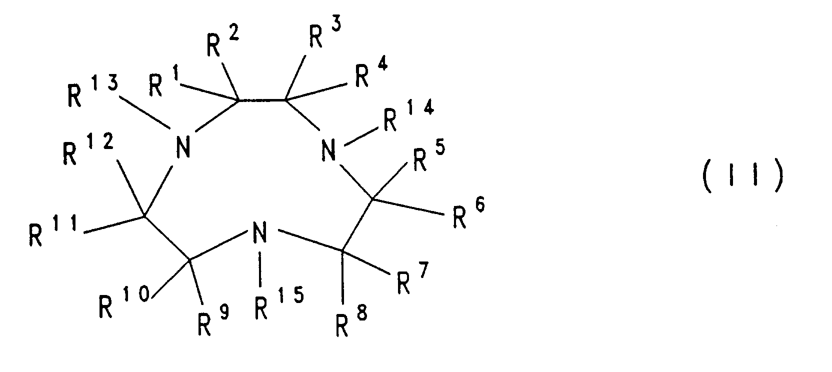
worin
R¹ bis R¹² unabhängig voneinander Wasserstoff, (C₁-C₁₂)Alkyl, (C₃-C₁₂)Cycloalkyl, (C₁-C₁₂)Alkenyl, (C₁-C₁₂)Alkoxy, (C₁-C₁₂)Acyloxy, Aryl, Heteroaryl, CH₂-Aryl, COOH, COO(C₁-C₁₂)Alkyl, COO-Aryl, CN, Halogen, C-(Halogen)₃, NH₂, NH-(C₁-C₁₂)-Alkyl, N(C₁-C₁₂-Alkyl)₂, NH-Aryl, N(Aryl)₂, N-Alkylaryl, S(C₁-C₁₂)Alkyl, SO(C₁-C₁₂)Alkyl, SO₂(C₁-C₁₂)Alkyl, P(C₁-C₁₂Alkyl)₂ und
R¹³ bis R¹⁵ Wasserstoff, (C₁-C₁₂)Alkyl, CH₂-Aryl, Aryl und Heteroaryl bedeuten.

## Beschreibung

Stereoselektive Oxidationsreaktionen sind von zentraler Bedeutung für die Synthese einer großen Anzahl von Wirkstoffen und Wirkstoffzwischenprodukten für Pharmaka und Agrochemikalien. Insbesondere Epoxidationsreaktionen sind eine wichtige Methode zur Darstellung von chiralen Verbindungen aufgrund der vielfältigen Funktionalisierbarkeit der Produkte.

Bisher gibt es kein generelles Verfahren, das chirale Verbindungen gleichzeitig in hohen Ausbeuten und hohen Enantioselektivitäten zugänglich macht.

Weiterhin ist es insbesondere aus technischer Sicht unzureichend, daß alle bisher bekannten Katalysatorsysteme nur außerordentlich schlechte Katalysator Turn Over Zahlen besitzen, so daß große Mengen an Katalysator - in der Regel zwischen 5 - 10 mol% - eingesetzt werden müssen.

Aus den genannten Gründen bestand ein großes industrielles Interesse bessere technisch nutzbare Katalysatorsysteme für die Herstellung chiraler Verbindungen zu entwickeln.

Die Aufgabe wird gelöst durch chirale Mangan-triazanonankomplexe der Formel (I)

[Mnᵤ(L)ᵥ(OR)_{w}(µ-O)ₓ(µOAc)_{y}]X_{z} (I)

worin bedeuten:
u, v gleich 1 oder 2;
w, x, y gleich 0, 1, 2 oder 3;
z gleich 1, 2 oder 3
mit der Maßgabe, daß, wenn u = 1 ist, v = 1, w = 1, 2 oder 3, z = 1, 2 oder 3 sind,
oder, wenn u = 2 ist, v = 2, w = 0 oder 1, x = 1, y = 2, z = 1 oder 2 sind,
oder v = 2, w = 0 oder 1, x = 1, y = 2, z = 2 oder 3 sind, oder v = 2, w = 0, 1, x = 3, y = 0, z = 1, 2 sind;
- R: (C₁-C₁₂)Alkyl,
- X: PF₆^{⊖}, F^{⊖}, Cl^{⊖}, Br^{⊖}, I^{⊖}, (C₆H₅)B^{⊖}, ClO₄^{⊖} bedeutet und
- L: für einen chiralen organischen Triazanonan-Liganden der allgemeinen Formel (II) steht, 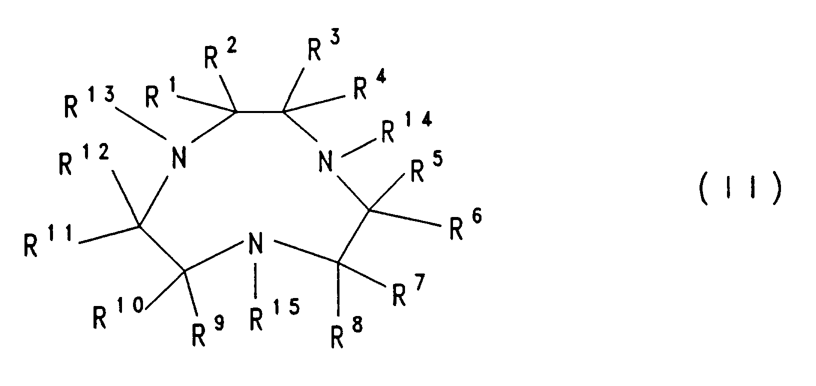
worin
R¹ bis R¹² unabhängig voneinander Wasserstoff, (C₁-C₁₂)Alkyl, (C₃-C₁₂)Cycloalkyl, (C₁-C₁₂)Alkenyl, (C₁-C₁₂)Alkoxy, (C₁-C₁₂)Acyloxy, Aryl, Heteroaryl, CH₂-Aryl, COOH, COO(C₁-C₁₂)Alkyl, COO-Aryl, CN, Halogen, C-(Halogen)₃, NH₂, NH-(C₁-C₁₂)-Alkyl, N(C₁-C₁₂-Alkyl)₂, NH-Aryl, N(Aryl)₂, N-Alkylaryl, S(C₁-C₁₂)Alkyl, SO(C₁-C₁₂)Alkyl, SO₂(C₁-C₁₂)Alkyl, P(C₁-C₁₂Alkyl)₂ und
R¹³ bis R¹⁵ Wasserstoff, (C₁-C₁₂)Alkyl, CH₂-Aryl, Aryl und Heteroaryl bedeuten.

Interessant sind Verbindungen worin Formel (I) für

[Mn(L)(OR)₃]X

[Mn₂(µO)(µOAc)₂(L)₂]X₂

[Mn₂(µO)(µOAc)₂(L)₂]X₃

steht, wobei für Ligand L in Formel (II) R¹ bis R¹² unabhängig voneinander Wasserstoff, (C₁-C₆)Alkyl, (C₃-C₆)Cycloalkyl, (C₁-C₆)Alkoxy, Phenyl, Naphthyl, Tolyl, Pyridyl, Bipyridyl, Benzyl, COO(C₁-C₆)Alkyl, N(C₁-C₆-Alkyl)₂ oder NH-Phenyl und R¹³ bis R¹⁵ Wasserstoff, (C₁-C₁₂)Alkyl, Phenyl, Tolyl, Benzyl, Pyridyl oder Bipyridyl bedeuten.

Hierbei sind insbesondere die Verbindungen wichtig, bei denen für den Liganden L R¹ bis R¹² Wasserstoff, (C₁-C₆)Alkyl, (C₃-C₆)Cycloalkyl, Phenyl, Benzyl, Pyridyl, Bipyridyl oder N(C₁-C₆-Alkyl)₂ und R¹³ bis R¹⁵ Wasserstoff, (C₁-C₆)Alkyl, Phenyl, Benzyl oder Pyridyl bedeuten.

Die erfindungsgemäßen Verbindungen können nach mehreren Verfahren hergestellt werden. Eine Methode besteht darin, daß der Ligand L, gelöst in einem polaren Lösungsmittel, mit einem 1,1 bis 1,5-fachen Überschuß eines Mangen(III)salzes bei einem pH-Wert von 7 bis 9 versetzt wird, die erhaltene Lösung mit einer Säure HX auf pH 4 bis 6 eingestellt wird und die Zielverbindung durch Zugabe eines unpolaren Lösungsmittels ausgefällt wird.

Hierbei hat es sich bewährt, als Mangan(III)salz Mangan(III)acetat, als polares Lösungsmittel ein Gemisch aus (C₁-C₃)Alkoholen und Wasser, als Säure HX HPF₆ und als unpolares Lösungsmittel einen Kohlenwasserstoff einzusetzen.

Eine weitere Methode besteht darin, daß Ligand L unter Kühlung zu einer alkoholischen Lösung eines Mangan(II)salzes gegeben wird, mit einem Überschuß Alkalimetallalkoholat versetzt wird und der gebildete Komplex unter Zugabe von NaX mittels Luft oxidiert und durch Extraktion isoliert wird.

Hierbei hat es sich bewährt, als Alkalimetallalkoholat Natriummethylat, als Salz NaX NaPF₆ und als Extraktionsmittel ein Gemisch aus Acetonitril/Heptan zu verwenden.

### Synthese der Liganden:

### Beispiel 1

### Synthese von Bis-N,N-(2-Tosyloxyethyl)-p-toluolsulfonamid

Ein 1 I-Dreihalskolben mit mechanischem Rührer, Rückflußkühler, Innenthermometer und 1l Tropftrichter wird mit 115.0 g (0.603 mol) p-Toluolsulfonylchlorid und 300 ml Pyridin befüllt. Die Mischung wird gerührt und auf 50°C erwärmt um den Feststoff zu lösen. Anschließend wird das Reaktionsgefäß in ein 30°C warmes Wasserbad getaucht. Dann addiert man eine Lösung von 21.0 g (0.20 mol) Bis-N,N-(2-hydroxyethyl)-amin in 30 ml Pyridin, so daß die Reaktionstemperatur zwischen 50 - 60°C beträgt. Die Mischung wird weitere 90 Minuten bei dieser Temperatur gerührt und anschließend in Eiswasser gegeben. Man filtriert Bis-N,N-(2-Tosyloxyethyl)-p-toluolsulfonamid in 90 % Ausbeute ab.

### Beispiel 2

### Synthese von Bis-N,N-Tosyl-1,2-cyclohexyldiamin

Ein 1 I-Dreihalskolben mit mechanischem Rührer, Rückflußkühler, Innenthermometer und 1l Tropftrichter wird mit 171.9 g (0.90 mol) p-Toluolsulfonylchlorid und 300 ml Pyridin befüllt. Die Mischung wird auf 50°C erwärmt um den Feststoff zu lösen. Anschließend wird das Reaktionsgefäß in ein 30°C warmes Wasserbad getaucht. Dann addiert man eine Lösung von 50.0 g (0.438 mol) trans-1,2-Cyclohexyldiamin in 50 ml Pyridin, so daß die Reaktionstemperatur zwischen 50 - 60°C beträgt. Die Mischung wird weitere 90 Minuten bei dieser Temperatur gerührt und anschließend in Eiswasser gegeben. Man filtriert Bis-N,N-Tosyl-1,2-cyclohexyldiamin in 90 % Ausbeute ab.

### Beispiel 3

### Synthese von 1,3,7-Tris-tosyl-1,2-cyclohexyl-1,3,7-triazacyclononan

100 g (0.236 mol) Bis-N,N-Tosyl-1,2-cyclohexyldiamin wurde im 1 l 3-Halskolben in 300 ml Ethanol suspendiert. Nach Erhitzen auf Rückfluß werden 330 ml einer 1.5 N Natriumethanolatlösung schnell zugetropft. Anschließend wird die Lösung in einen Erlenmeyerkolben dekantiert. Nach dem vorsichtigen Eindampfen im Vakuum kristallisiert das Dinatriumsalz von Bis-N,N-Tosyl-1,2-cyclohexyldiamin in 90 % Ausbeute aus. 80 g (0.17 mol) des Dinatriumsalzes werden dann in einem 1 l 3-Halskolben überführt und in 500 ml Dimethylformamid gelöst. Die Reaktionsmischung wird auf 100°C erhitzt und mit 97 g (0.17 mol) Bis-N,N-(2-Tosyloxyethyl)-p-toluolsulfonamid in 300 ml Dimethylformamid tropfenweise versetzt. Nach beendeter Zugabe wird eine weitere Stunde bei 100°C gerührt, dann abgekühlt auf Raumtemperatur. Nach wäßriger Aufarbeitung und Kristallisation erhält man das gewünschte Produkt in 68 % Ausbeute.

### Beispiel 4

### Synthese von 1,2-Cyclohexyl-1,3,7-triazacyclononan

50 g des chiralen cyclischen Triazanonanderivats wird mit 200 ml konzentrierter Schwefelsäure versetzt. Die Reaktionsmischung wird auf 100°C erwärmt und 70 Stunden bei dieser Temperatur gerührt. Nach Abkühlen auf 0°C gibt man 500 ml Diethylether vorsichtig zu. Das ausgefallene Salz wird unter Stickstoff abfiltriert und mit wasserfreiem Diethylether gewaschen. Das Salz wird dann in 200 ml Wasser gegeben und mit 30 ml einer 50 %igen Natronlauge neutralisiert. Die Lösung wird mit 3 g Aktivkohle auf 80°C erwärmt und über Celte filtriert. Das eisgekühlte Filtrat wird durch Zusatz von Schwefelsäure auf pH 1 eingestellt. Das dabei ausgefallene Produkt wird abfiltriert und zur weiteren Reinigung aus Acetonitril umkristallisiert. Man erhält das gewünschte Produkt in 71 % Ausbeute.
MS (El, 70 eV): M + H + 184 (100 %)

| Elementaranalyse: | | | |
|---|---|---|---|
| berechnet | C 65.53 | H 11.55 | N 22.93 |
| gefunden | C 65.41 | H 11.32 | N 22.58 |

### Beispiel 5

### Synthese von 1,3,7-Trimethyl-1,2-cyclohexyl-1,3,7-triazacyclononan (= Ligand L)

In einen 100 ml Dreihalskolben werden 20.0 g (88.4 mmol) 1,2-Cyclohexyl-1,3,7-triazacyclononan in 50 ml Dichlormethan gelöst. Zur Reaktionsmischung werden 25.5 g Methyliodid (266 mmol) innerhalb von 30 Minuten tropfenweise zugesetzt. Die Mischung wird anschließend 12 Stunden refluxiert, abgekühlt und filtriert. Nach Extraktion mit dreimal 100 ml Wasser wird die organische Phase mit Magnesiumsulfat getrocknet. Nach Abdestillieren des Lösungsmittels im Vakuum erhält man das gewünschte Produkt, das durch Chromatographie an Kieselgel mit Ethylacetat/Hexan (1:1) als Laufmittel weiter gereinigt werden kann. Ausbeute: 80 %
MS (El, 70 eV): M + H + 226 (100 %)

| Elementaranalyse: | | | |
|---|---|---|---|
| berechnet | C 69.28 | H 12.08 | N 18.64 |
| gefunden | C 68.98 | H 11.95 | N 18.43 |

### Synthese der Komplexe

### Beispiel 6

### Synthese von [Mn(L)(OMe)₃]PF₆ (Katalysator A)

### (L = 1,3,7-Trimethyl-1,2-cyclohexyl-1,3,7-triazacyclononan, Beispiel 5)

Unter Inertgas wird eine auf 0°C gekühlte Lösung von 2.25 g (10 Mmol) Ligand L in 50 ml wasserfreiem Methanol zu einer Suspension von 1.26 g (10 mMol) wasserfreiem MnCl₂ in 10 ml wasserfreiem Methanol transferiert und etwa 30 Minuten gerührt. Gleichzeitig werden 1.53 g (15 mMol) Natrium in Methanol gelöst, das Methanol eingedampft und die obige Reaktionslösung unter Inertgas und bei 0°C durch eine Fritte zu dem verbleibenden weißen Rückstand transferiert. Man läßt etwa weitere 20 Minuten rühren und gibt dann 3.36 g (20 mMol) Natriumhexafluorphosphat gelöst in 20 ml Methanol zu der Reaktionsmischung, die nun an Luft gebracht, auf Raumtemperatur erwärmt, etwa auf die Hälfte eingedampft und mit etwas n-Heptan versetzt wird. Der ausgefallene Rückstand wird in Acetonitril suspendiert, filtriert und das Filtrat nach Einengen mit etwas n-Heptan versetzt. Dabei fällt ein braunes Pulver aus, das nach Abfiltrieren und Trocknen 1.34 g (26 %) ergibt.

| Elementaranalyse: | | | | |
|---|---|---|---|---|
| berechnet | C 37.0 | H 7.0 | N 8.1 | Mn 10.6 |
| gefunden | C 38.1 | H 7.3 | N 8.0 | Mn 9.9 |

- Schmelzpunkt:: > 300°C (Zersetzung)

### Beispiel 7

### Synthese von [Mn₂(µ-O)(µ-OAc)₂(L)₂][PF₆]₂ (Katalysator B)

2.25 g (10 mMol) Ligand L werden unter Inertgas bei Raumtemperatur in 60 ml einer Mischung aus Ethanol/Wasser (90/10 v/v) gelöst, mit 3.22 g (12 mMol) Mangan(III)acetat-Dihydrat versetzt und zunächst durch Zugabe von Natriumacetat der pH auf 8, danach durch vorsichtiges Zutropfen von konzentrierter HPF₆-Lösung auf pH 5 eingestellt. Man läßt etwa 10 Minuten rühren, gibt dann 3.36 g (20 mMol) Natriumhexafluorphosphat in fester Form zu der Reaktionsmischung, die etwa weitere 10 Minuten gerührt und mit etwas n-Heptan versetzt wird. Der ausgefallene Rückstand wird in Acetonitril suspendiert, filtriert und das Filtrat nach Einengen mit etwas n-Heptan versetzt. Dieser Vorgang wird zweimal wiederholt. Dabei fällt ein rotes Pulver aus, das nach Abfiltrieren und Trocknen 0.81 g (16 %) ergibt.

| Elementaranalyse: | | | | | |
|---|---|---|---|---|---|
| berechnet | C 36.7 | H 6.2 | N 8.6 | O 8.2 | Mn 10.4 |
| gefunden | C 36.1 | H 6.3 | N 8.3 | O 8.5 | Mn 10.0 |

- Schmelzpunkt:: > 300°C (Zersetzung)

### Beispiel 8

### Synthese von [Mn₂(µ-O)(µ-OAc)₂(L)₂][PF₆]₃ (Katalysator C)

200 mg (0.2 mMol) des Mangan-Komplexes aus Beispiel 7 werden in 30 ml einer 0.1 M Lösung von Tetrabutylammoniumhexafluorphosphat (Leitsalz) in Acetonitril gelöst, in den Anodenraum einer durch eine ®Nafion-Membran geteilten Zweielektrodenzelle mit Pt-Anode eingefüllt und bei einer konstanten Stromdichte von 5 mA/cm² elektrolysiert. Nach Durchgang von 0.96 Faraday/Mol steigt die Zellspannung sehr stark an. Zu diesem Zeitpunkt wird die Elektrolyse unterbrochen, die Farbe des Anolyten hat sich von anfangs dunkelrot nach grünlich-braun verändert. Die Elektrolyselösung wird eingeengt, der Rückstand mit Ethanol/Wasser gewaschen und aus Acetonitril/n-Heptan umkristallisiert. Das Produkt ist mit etwas Leitsalz verunreinigt. Ausbeute: 280 mg.

### Beispiel 9

### Synthese von [Mn₂(µ-O)₃(L)₂][PF₆]₂ (Katalysator D)

200 mg (0.2 mMol) des Mangan-Komplexes aus Beispiel 2 werden in 30 ml einer Mischung aus Ethanol/Wasser (1/1, v/v) unter Ultrabeschallung gelöst, mit 2 ml Triethylamin und 2 g festem Natriumhexafluorophosphat versetzt, einige Minuten an Luft gerührt. Die Reaktionsmischung wird filtriert und das Filtrat eingedampft. Der verbliebene Rückstand wird in wenig Acetonitril gelöst, filtriert, und das eingedampfte Filtrat nochmals aus Acetonitril/n-Heptan umkristallisiert. Es verbleiben 80 mg rote Nadeln.

| Elementaranalyse: | | | | | |
|---|---|---|---|---|---|
| berechnet: | C 33.8 | H 5.9 | N 9.1 | O 8.7 | Mn 11.1 |
| experimentell: | C 34.5 | H 6.0 | N 8.9 | O 8.8 | Mn 10.7 |

## Patentansprüche

1. Chirale Mangan-triazanonankomplexe der Formel (I)
[Mnᵤ(L)ᵥ(OR)_{w}(µ-O)ₓ(µOAc)_{y}]X_{z}
worin bedeuten:
u, v gleich 1 oder 2;
w, x, y gleich 0, 1, 2 oder 3;
z gleich 1, 2 oder 3
mit der Maßgabe, daß, wenn u = 1 ist, v = 1, w = 1, 2 oder 3, z = 1, 2 oder 3 sind,
oder, wenn u = 2 ist, v = 2, w = 0 oder 1, x = 1, y = 2, z = 1 oder 2 sind, oder v = 2, w = 0 oder 1, x = 1, y = 2, z = 2 oder 3 sind, oder v = 2, w = 0 oder 1, x = 3, y = 0, z = 1 oder 2 sind;
R (C₁-C₁₂)Alkyl,
X PF₆^{⊖}, F^{⊖}, Cl^{⊖}, Br^{⊖}, I^{⊖}, (C₆H₅)B^{⊖}, ClO₄^{⊖} bedeutet und
L für einen chiralen organischen Triazanonan-Liganden der allgemeinen Formel (II) steht, 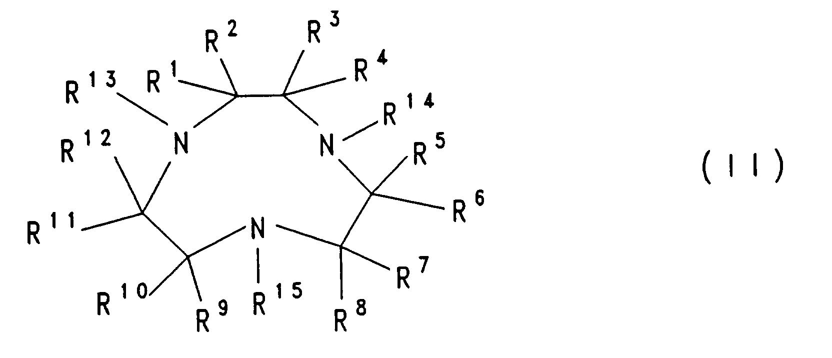
worin
R¹ bis R¹² unabhängig voneinander Wasserstoff, (C₁-C₁₂)Alkyl, (C₃-C₁₂)Cycloalkyl, (C₁-C₁₂)Alkenyl, (C₁-C₁₂)Alkoxy, (C₁-C₁₂)Acyloxy, Aryl, Heteroaryl, CH₂-Aryl, COOH, COO(C₁-C₁₂)Alkyl, COO-Aryl, CN, Halogen, C-(Halogen)₃, NH₂, NH-(C₁-C₁₂)-Alkyl, N(C₁-C₁₂-Alkyl)₂, NH-Aryl, N(Aryl)₂, N-Alkylaryl, S(C₁-C₁₂)Alkyl, SO(C₁-C₁₂)Alkyl, SO₂(C₁-C₁₂)Alkyl, P(C₁-C₁₂Alkyl)₂ und
R¹³ bis R¹⁵ Wasserstoff, (C₁-C₁₂)Alkyl, CH₂-Aryl, Aryl und Heteroaryl bedeuten.

2. Verbindungen nach Anspruch 1 der Formel
[Mn(L)(OR)₃]X,
worin für Ligand L in Formel (II) R¹ bis R¹² unabhängig voneinander Wasserstoff, (C₁-C₆)Alkyl, (C₃-C₆)Cycloalkyl, (C₁-C₆)Alkoxy, Phenyl, Naphthyl, Tolyl, Pyridyl, Bipyridyl, Benzyl, COO(C₁-C₆)Alkyl, N(C₁-C₆)Alkyl₂ oder NH-Phenyl und R¹³ bis R¹⁵ Wasserstoff, (C₁-C₁₂)Alkyl, Phenyl, Tolyl, Benzyl, Pyridyl oder Bipyridyl bedeuten.

3. Verbindungen nach Anspruch 1 der Formel
[Mn₂(µO)(µOAc)₂(L)₂]X₂,
worin für Ligand L in Formel (II) R¹ bis R¹² unabhängig voneinander Wasserstoff, (C₁-C₆)Alkyl, (C₃-C₆)Cycloalkyl, (C₁-C₆)Alkoxy, Phenyl, Naphthyl, Tolyl, Pyridyl, Bipyridyl, Benzyl, COO(C₁-C₆)Alkyl, N(C₁-C₆)Alkyl₂ oder NH-Phenyl und R¹³ bis R¹⁵ Wasserstoff, (C₁-C₁₂)Alkyl, Phenyl, Tolyl, Benzyl, Pyridyl oder Bipyridyl bedeuten.

4. Verbindungen nach Anspruch 1 der Formel
[Mn₂(µO)(µOAc)₂(L)₂]X₃,
worin für Ligand L in Formel (II) R¹ bis R¹² unabhängig voneinander Wasserstoff, (C₁-C₆)Alkyl, (C₃-C₆)Cycloalkyl, (C₁-C₆)Alkoxy, Phenyl, Naphthyl, Tolyl, Pyridyl, Bipyridyl, Benzyl, COO(C₁-C₆)Alkyl, N(C₁-C₆)Alkyl₂ oder NH-Phenyl und R¹³ bis R¹⁵ Wasserstoff, (C₁-C₁₂)Alkyl, Phenyl, Tolyl, Benzyl, Pyridyl oder Bipyridyl bedeuten.

5. Verbindungen nach Anspruch 1 der Formel
[Mn₂(µO)₃L₂]X₂,
worin für Ligand L in Formel (II) R¹ bis R¹² unabhängig voneinander Alkyl, (C₃-C₆)Cycloalkyl, (C₁-C₆)Alkoxy, Phenyl, Naphthyl, Tolyl, Pyridyl, Bipyridyl, Benzyl, COO(C₁-C₆)Alkyl, N(C₁-C₆)Alkyl₂ oder NH-Phenyl und R¹³ bis R¹⁵ Wasserstoff, (C₁-C₁₂)Alkyl, Phenyl, Tolyl, Benzyl, Pyridyl oder Bipyridyl bedeuten.

6. Verbindungen nach mindestens einem der Ansprüche 1 bis 5, dadurch gekennzeichnet, daß für den Liganden L R¹ bis R¹² Wasserstoff, (C₁-C₆)Alkyl, (C₃-C₆)Cycloalkyl, Phenyl, Benzyl, Pyridyl, Bipyridyl oder N(C₁-C₆)Alkyl₂ und R¹³ bis R¹⁵ Wasserstoff, (C₁-C₆)Alkyl, Phenyl, Benzyl, Pyridyl bedeuten.

7. Verfahren zur Herstellung von Verbindungen nach Anspruch 1, dadurch gekennzeichnet, daß der Ligand L, gelöst in einem polaren Lösungsmittel, mit einem 1,1 bis 1,5 fachen Überschuß eines Mangan(III)salzes bei einem pH-Wert von 7-9 versetzt wird, die erhaltene Lösung mit einer Säure HX auf pH 4 bis 6 eingestellt wird und die Zielverbindung durch Zugabe eines unpolaren Lösungsmittels ausgefällt wird.

8. Verfahren nach Anspruch 7, dadurch gekennzeichnet, daß als Mangan(III)salz Mangan(III)acetat, als polares Lösungsmittel ein Gemisch aus (C₁-C₃)Alkoholen und Wasser, als Säure HX HPF₆ und als unpolares Lösungsmittel ein Kohlenwasserstoff eingesetzt wird.

9. Verfahren zur Herstellung von Verbindungen nach Anspruch 1, dadurch gekennzeichnet, daß Ligand L unter Kühlung zu einer alkoholischen Lösung eines Mangan(II)salzes gegeben wird, mit einem Überschuß Alkalimetallalkoholat versetzt wird und der gebildete Komplex unter Zugabe von NaX mittels Luft oxidiert und durch Extraktion isoliert wird.

10. Verfahren nach Anspruch 9, dadurch gekennzeichnet, daß als Alkalimetallalkoholat Natriummethylat, als Salz NaX NaPF₆ und als Extraktionsmittel ein Gemisch aus Acetonitril/Heptan verwendet wird.
